# EUROPÄISCHE PATENTSCHRIFT

(11) **EP 3 132 181 B1**
(45) Veröffentlichungstag und Bekanntmachung des Hinweises auf die Patenterteilung: **02.05.2018**
(21) Anmeldenummer: 15711477.8
(22) Anmeldetag: 18.03.2015
(51) Int. Cl.: F21K 99/00, F21S 8/10, F21V 7/22, B60Q 1/00, B60Q 11/00, F21V 23/04, F21V 25/02, F21V 9/16, F21Y 115/30, F21Y 101/00

(54) **BELEUCHTUNGSVORRICHTUNG MIT LICHTMISCHELEMENT UND LEUCHTSTOFFVOLUMEN**
LIGHTING DEVICE WITH LIGHT MIXING ELEMENT AND LUMINESCENT VOLUME
DISPOSITIF D'ÉCLAIRAGE COMPRENANT UN ÉLÉMENT DE MÉLANGE DE LUMIÈRE ET UN VOLUME DE SUBSTANCE LUMINESCENTE

(30) Priorität: 26.03.2014 DE 102014205606
(43) Veröffentlichungstag der Anmeldung: 22.02.2017
(73) Patentinhaber: OSRAM GmbH, 80807 München (DE)
(72) Erfinder: NAUEN, Andre, 93051 Regensburg (DE); FORSTER, Georg, 93049 Regensburg (DE); DUSSAULT, David, 93073 Neutraubling (DE)
(86) Internationale Anmeldenummer: PCT/EP2015/055610
(87) Internationale Veröffentlichungsnummer: WO 2015/144506

(56) Entgegenhaltungen:
- WO-A1-2013/001953
- US-A1- 2012 275 174

## Beschreibung

Die Erfindung betrifft eine Beleuchtungsvorrichtung, aufweisend ein Lichtmischelement mit einer Lichteintrittsfläche und einer Lichtaustrittsfläche, mehrere Lichtquellen, deren Primärlicht auf die Lichteintrittsfläche gerichtet ist, eine Wellenlängenkonversionseinrichtung mit einem Träger, an dem ein Leuchtstoffvolumen angeordnet ist, welches Leuchtstoffvolumen mittels von der Lichtaustrittsfläche abgestrahltem Primärlicht beleuchtbar ist und mindestens ein optisches Element zum Formen eines von der Wellenlängenkonversionseinrichtung abgestrahlten Nutzlichts. Die Erfindung ist insbesondere anwendbar auf eine Fahrzeug-Beleuchtungsvorrichtung, insbesondere auf einen Scheinwerfer.

Zur praktischen Anwendung solcher betreffenden Beleuchtungsvorrichtungen wird oftmals verlangt, dass ein Austritt eines konzentrierten Primärlichtstrahls verhindert wird. Der konzentrierte Primärlichtstrahl mag beispielsweise in einem Schadensfall abgestrahlt werden, wenn das Leuchtstoffvolumen beschädigt ist (z.B. Löcher oder Risse aufweist) oder sich sogar zumindest teilweise von dem Träger gelöst hat.

Dazu ist es bekannt, einen Absorptionsbereich in einem Lichtpfad hinter dem Leuchtstoffvolumen vorzusehen, welcher sich im Zentrum eines Primärlichtstrahls befindet, welcher sich ergibt, wenn sich das Leuchtstoffvolumen von dem Träger gelöst hat. In einem solchen Schadensfall trifft also der Primärlichtpfad zentriert auf den Absorptionsbereich und wird dort zumindest teilweise absorbiert. Wird der Absorptionsbereich so gewählt, dass er sämtliche Bereiche des Primärlichtstrahls oberhalb einer vergleichsweise niedrigen Intensitätsschwelle absorbiert, nimmt er nachteiligerweise eine große Fläche ein, welche im normalen, unbeschädigten Betrieb der Beleuchtungsvorrichtung deren Lichtauskoppeleffizienz oder Lichtausbeute signifikant verringert und zudem eine lokal spürbar ungleichmäßige Helligkeit im Lichtabstrahlmuster erzeugt. Wird hingegen der Absorptionsbereich so klein gewählt, dass er im normalen, unbeschädigten Betrieb der Beleuchtungsvorrichtung deren Lichtauskoppeleffizienz oder Lichtausbeute nicht signifikant verringert und zudem eine lokal spürbar ungleichmäßige Helligkeit im Lichtabstrahlmuster vermeidet, kann im Schadensfall immer noch ein konzentrierter Primärlichtstrahl austreten.

Die Druckschrift US 2012/0275174 A1 offenbart eine Projektionseinheit mit einem Lichtkollektor, der eine Lichteinkoppelfläche und eine Lichtauskoppelfläche mit kleineren Abmessungen als die Lichteinkoppelfläche aufweist, und mit einem Leuchtstoffelement, das eine mit Laserlicht vom Lichtkollektor beleuchtete Oberfläche besitzt, und mit einem Projektor, der Licht von der Oberfläche des Leuchtstoffelements projiziert.

Es ist die **Aufgabe** der vorliegenden Erfindung, die Nachteile des Standes der Technik zumindest teilweise zu überwinden und insbesondere eine einfach umsetzbare Möglichkeit zur Vermeidung eines Austritts eines konzentrierten Primärlichtstrahls im Schadensfall bei einer vergleichsweise geringen Verminderung einer Lichtauskoppeleffizienz im normalen Betrieb bereitzustellen. Dadurch soll insbesondere eine Augensicherheitsgefährdung verringert werden. Diese Aufgabe soll insbesondere für den Bereich der Fahrzeug-Beleuchtungsvorrichtungen gelöst werden.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch eine Beleuchtungsvorrichtung, aufweisend ein Lichtmischelement mit einer Lichteintrittsfläche und einer Lichtaustrittsfläche, mehrere Lichtquellen, deren Primärlicht auf die Lichteintrittsfläche gerichtet ist, eine Wellenlängenkonversionseinrichtung mit einem Träger, an dem ein Leuchtstoffvolumen angeordnet ist, welches Leuchtstoffvolumen mittels von der Lichtaustrittsfläche abgestrahltem Primärlicht beleuchtbar ist und mindestens eine Auskopplungsoptik zum Formen eines von der Wellenlängenkonversionseinrichtung abgestrahlten

Nutzlichts, welches mindestens einen nicht-abbildenden Sicherheitsbereich aufweist, wobei die mehreren Lichtquellen ihr Primärlicht unter einem Winkel ("divergent") auf die Lichteintrittsfläche einstrahlen und der mindestens eine Sicherheitsbereich eine Position auf der Auskopplungsoptik einnimmt, welche einem Bereich hoher Intensität des Primärlichts bei entferntem oder beschädigtem Leuchtstoffvolumen entspricht.

Dabei wird die Erkenntnis ausgenutzt, dass ein Lichtmuster an der Lichtaustrittsfläche des Lichtmischelements in der Regel nicht nur ein einziges mittiges oder zentrales Intensitäts- oder Helligkeitsmaximum aufweist (von dem aus dann die Intensität mit steigendem Abstand abfällt), sondern ein außermittiges oder nicht-mittiges Lichtmuster hoher Intensität, falls eine oder mehr als eine Lichtquelle ihr Primärlicht divergent in das Lichtmischelement einstrahlt. Bei dem außermittigen oder nicht-mittigen Lichtmuster gibt es insbesondere kein Zentrum maximaler Intensität, welches sich auf der optischen Achse des Lichtmischelements befindet, sondern mindestens einen Bereich mit einem zumindest lokalen Intensitätsmaximum, der seitlich von der Mitte oder von einem Zentrum des Lichtmusters versetzt angeordnet ist. Die Mitte mag insbesondere eine geometrische Mitte des Lichtmusters sein, insbesondere eine Mitte der Lichtaustrittsfläche entlang oder auf der optischen Achse des Lichtmischelements. Dieses außermittige Lichtmuster mag mehrere außermittige lokale Intensitätsmaxima aufweisen oder mag ein ausgedehntes (nicht punktförmiges oder nicht kreisförmiges) lokales Intensitätsmaximum aufweisen.

Das außermittige Lichtmuster mag beispielsweise mehrere ringförmig verteilte lokale Intensitätsmaxima aufweisen oder einem durchgehenden ringförmigen Bereich hoher Intensität entsprechen, ist jedoch nicht darauf beschränkt. Unter einer hohen Intensität mag beispielsweise eine Intensität verstanden werden, die höher als eine Intensität in der Mitte des Lichtmusters ist. Unter einer hohen Intensität mag beispielsweise auch eine Intensität verstanden werden, die so hoch ist, dass sie eine Augensicherheit eines entsprechenden, aus der Beleuchtungsvorrichtung ausgesandten Lichtstrahls gefährden könnte. Unter einer hohen Intensität mag insbesondere eine Intensität verstanden werden, die höher als für eine Laserklasse 1, insbesondere als für eine Laserklasse 2, insbesondere als für eine Laserklasse 3(z.B. 3R oder 3B) erlaubt ist. Unter einer hohen Intensität mag beispielsweise auch eine Intensität verstanden werden, die höher als eine Intensität in der Mitte des Lichtmusters ist. Ein Bereich hoher Intensität des Lichtmusters mag insbesondere ein Bereich mit mindestens 50%, insbesondere mit mindestens 60%, insbesondere mit mindestens 70%, insbesondere mit mindestens 80%, insbesondere mit mindestens 90% der maximalen Intensität des Lichtmusters sein.

Unter einem ringförmigen Bereich mag insbesondere ein umlaufend geschlossener Bereich verstanden werden, z.B. ein kreisringförmiger Bereich oder ein daraus aus einer Verzerrung (z.B. einer Dehnung) und/oder Spiegelung erzeugter Bereich, z.B. ein oval kreisförmiger Bereich. Dies gilt analog für eine Ringform.

Wird ein Primärlichtstrahl, welcher diesem Lichtmuster entspricht, auf das Leuchtstoffvolumen gestrahlt, ergibt sich hinter dem Leuchtstoffvolumen eine stark aufgeweitete Lichtverteilung. Das Licht mit dieser aufgeweiteten Lichtverteilung trifft dann auf die Auskopplungsoptik (z.B. umfassend einen Reflektor, eine Linse usw.), wird davon geformt und als Nutzlicht von der Beleuchtungsvorrichtung ausgegeben bzw. aus der Beleuchtungsvorrichtung ausgekoppelt.

Die aufgeweitete Lichtverteilung weist zumindest einen Anteil an Sekundärlicht auf, das sich durch eine Wellenlängenkonversion des Primärlichts an dem Leuchtstoffvolumen ergibt. Häufig wird von dem Leuchtstoffvolumen auch ein Restanteil an Primärlicht abgestrahlt, wobei auch dieses Primärlicht im Vergleich zu dem einfallenden Primärlichtstrahl erheblich aufgeweitet ist, z.B. durch Streuung in dem Leuchtstoffvolumen. Beispielweise mag ein blaues Primärlicht des auf das Leuchtstoffvolumen auftreffenden Primärlichtstrahls teilweise in gelbes Sekundärlicht umgewandelt werden. Das Leuchtstoffvolumen strahlt dann ein gelb-blaues bzw. weißes Mischlicht ab.

Eine maximale Intensität des von dem Leuchtstoffvolumen abgestrahlten Sekundärlichts oder Mischlichts ist in der Regel weitaus geringer als eine maximale Intensität des Primärlichtstrahls. Auch ist die Intensitätsverteilung des von dem Leuchtstoffvolumen abgestrahlten Lichts vergleichsweise homogen, während der Primärlichtstrahl ein hochgradig lokalisiertes Bildmuster zeigen kann.

Fällt das Leuchtstoffvolumen im Schadensfall von dem Träger ab, kann der Primärlichtstrahl ungehindert auf die nachgeschaltete Auskopplungsoptik treffen und wird von dieser weiter nach Außen abgegeben. Die Form bzw. das Muster dieses Primärlichtstrahls auf der Auskopplungsoptik weist weiterhin mindestens ein nicht-mittiges Intensitätsmaximum auf, und zwar trotz seiner Reflexion an dem oder seines Durchlaufs durch den Träger und ggf. weiterer optischer Elemente und trotz einer in der Regel verzerrten Abbildung auf der Auskopplungsoptik.

Durch den mindestens einen nicht-abbildenden Bereich (der ohne Beschränkung der Allgemeinheit auch als bezeichnet wird) werden die Intensitätsspitzen des Primärlichtstrahls in dem von der Auskopplungsoptik nach außen abgegeben Licht im Schadensfall stark verringert. Dadurch, dass jedoch das auf einen mittigen Bereich des Primärlichtstrahls einfallende Licht von der Auskopplungsoptik nach außen abstrahlbar ist, wird im normalen Betrieb (bei vorhandenem, unbeschädigtem Leuchtstoffvolumen) dieses Licht genutzt. Insgesamt kann so im Schadensfall eine Abstrahlung des Primärlichtstrahls mit hoher Intensität aus der Beleuchtungsvorrichtung heraus verhindert werden, während im normalen Betrieb ein Lichtverlust durch den mindestens einen Sicherheitsbereich klein gehalten wird.

Das Lichtmischelement dient dazu, die Leistungsverteilung des Primärlichts zu homogenisieren. Das Lichtmischelement mag ein Hohlkörper oder ein Vollkörper sein. Bei einem Hohlkörper mag die Lichtmischung durch Reflexion des Lichts an einer reflektierenden Innenwand bei einem Durchlauf von der Lichteintrittsfläche zu der Lichtaustrittsfläche erreicht werden. Bei einem Vollkörper aus einem typischerweise transparenten oder nur gering streuenden Material mag die Lichtmischung durch Reflexion des Lichts in dem Körper bei einem Durchlauf von der Lichteintrittsfläche zu der Lichtaustrittsfläche erreicht werden, z.B. durch innere Totalreflexion. Das Material des Vollkörpers mag beispielsweise Glas, PMMA, PC oder ABS sein.

Das Lichtmischelement mag auch als Integrator bezeichnet werden.

Die Lichtaustrittsfläche des Lichtmischelements mag beispielsweise direkt an dem Leuchtstoffvolumen enden oder mag in einer Variante durch mindestens ein zwischengeschaltetes optisches Element darauf abgebildet werden (z. B. in Verbindung mit einem Umklappen der optischen Achse).

Es ist eine Ausgestaltung, dass das Lichtmischelement ein längliches Lichtmischelement, z.B. ein Lichtwellenleiter, ist, was unter anderem den Vorteil einer einfachen und preiswerten Herstellung ergibt. Das längliche Lichtmischelement weist insbesondere entlang seiner Längserstreckung eine erheblich größere Ausdehnung aus als quer dazu, z.B. eine um mindestens eine Größenordnung größere Ausdehnung. Das längliche Lichtmischelement mag insbesondere ein lineares bzw. sich geradlinig erstreckendes ("stabförmiges") Lichtmischelement sein.

Es ist eine Weiterbildung, dass das längliche Lichtmischelement eine Länge im Bereich von Millimetern aufweist. Es mag beispielsweise 10 Millimeter oder mehr lang sein.

Es ist eine Weiterbildung, dass das stabförmige Lichtmischelement einen maximalen Durchmesser (quer zur Längserstreckung) von nicht mehr als 500 Mikrometern aufweist, insbesondere von nicht mehr als 200 Mikrometern, insbesondere von nicht mehr als 100 Mikrometern, insbesondere von nicht mehr als 50 Mikrometern, insbesondere von nicht mehr als 10 Mikrometern.

Insbesondere bei einer drehsymmetrischen Querschnittsform des Lichtmischelements ergibt sich an der Lichtaustrittsfläche ein zumindest grundsätzliches ringartiges Lichtmuster. Das Lichtmischelement ist jedoch nicht auf eine drehsymmetrische Querschnittsform beschränkt. Auch mag eine Gestalt und/oder Größe der Querschnittsform sich über die Länge ändern. Das grundsätzliche ringartige Lichtmuster mag durch eine Wahl der Gestalt der Querschnittsform insbesondere gezielt verzerrt werden. Je mehr Lichtquellen ihr Licht divergent auf die Lichteintrittsfläche strahlen, desto schärfer wird das an der Lichtaustrittsfläche erzeugte nicht-mittige, insbesondere ringartige, Lichtmuster. Die Intensität des Lichtmusters in seinem Zentrum oder mittigen oder zentralen Bereich ist jedoch in der Regel nicht Null, sondern kann integral merklich zu einem von der Beleuchtungsvorrichtung abgestrahlten Nutzlichtstrahl Lichtstrom beitragen.

Es ist eine Ausgestaltung, dass das Lichtmischelement zumindest abschnittweise, insbesondere über die ganze Länge, einen hexagonalen Querschnitt aufweist. Denn es hat sich gezeigt, dass sich so mit geringem Fertigungsaufwand ein gleichmäßiges ringartiges Lichtmuster besonders gut annähern lässt.

Jedoch mag das Lichtmischelement beispielsweise auch eine andere eckige Querschnittsform aufweisen, z.B. eine quadratische, pentagonale, oktogonale usw. Querschnittsform. Besonders vorteilhaft ist allgemein eine n-eckige Querschnittsform mit n > 4 Ecken.

Die mindestens eine Lichtquelle mag insbesondere mindestens eine Halbleiterlichtquelle sein, ist aber nicht darauf beschränkt. Insbesondere umfasst die mindestens eine Halbleiterlichtquelle mindestens eine Leuchtdiode. Bei Vorliegen mehrerer Leuchtdioden können diese in der gleichen Farbe oder in verschiedenen Farben leuchten. Eine Farbe kann monochrom (z.B. rot, grün, blau usw.) oder multichrom (z.B. weiß) sein. Auch kann das von der mindestens einen Leuchtdiode abgestrahlte Licht ein infrarotes Licht (IR-LED) oder ein ultraviolettes Licht (UV-LED) sein. Mehrere Leuchtdioden können ein Mischlicht erzeugen; z.B. ein weißes Mischlicht. Die mindestens eine Leuchtdiode kann mindestens einen wellenlängenumwandelnden Leuchtstoff enthalten (Konversions-LED). Der Leuchtstoff kann alternativ oder zusätzlich entfernt von der Leuchtdiode angeordnet sein ("Remote Phosphor"). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AlInGaP, sind allgemein auch organische LEDs (OLEDs, z.B. Polymer-OLEDs) einsetzbar. Alternativ kann die mindestens eine Halbleiterlichtquelle z.B. mindestens einen Diodenlaser bzw. Laserdiode aufweisen.

Die mindestens eine Lichtquelle mag Primärlicht einer bestimmten Wellenlänge oder eines bestimmten engen Wellenbereichs aussenden, z.B. blaues Primärlicht. Die mindestens eine Lichtquelle mag alternativ Primärlicht aus mehreren Wellenlängen oder Wellenlängenbereichen auf die Lichteintrittsfläche des Lichtmischelements einstrahlen.

Das Leuchtstoffvolumen mag insbesondere einen oder mehrere Leuchtstoffe aufweisen. Dabei ist mindestens ein Leuchtstoff dazu ausgebildet, das von dem Lichtmischstab einfallende Primärlicht in Sekundärlicht größerer Wellenlänge umzuwandeln, z.B. blaues Primärlicht in gelbes Sekundärlicht. Dazu mag beispielsweise ein keramischer Leuchtstoff verwendet werden, z.B. eine (Ce, Gd):YAG-Keramik. Ein keramischer Leuchtstoff mag z.B. als keramisches Leuchtstoffplättchen vorliegen.

Das Leuchtstoffvolumen mag mindestens einen weiteren Leuchtstoff aufweisen, welcher von dem Lichtmischelement einfallendes Primärlicht in anderes Sekundärlicht größerer Wellenlänge umwandelt, z.B. blaues Primärlicht in rotes Sekundärlicht. Das Leuchtstoffvolumen mag auch mindestens einen Leuchtstoff aufweisen, welcher Sekundärlicht in ein weiteres Sekundärlicht noch größerer Wellenlänge (auch als "Tertiärlicht" bezeichnet) umwandeln kann, z.B. grünes Sekundärlicht in orangefarbenes Tertiärlicht.

Das Leuchtstoffvolumen mag insbesondere als eine Leuchtstoffschicht vorliegen. Ein Durchmesser des Leuchtstoffvolumens mag in einer Weiterbildung einen Wert von zwei Millimeter, insbesondere von einem Millimeter, nicht überschreiten.

Durch die strahlaufweitende Wirkung des Leuchtstoffvolumens wird das von dem Lichtmischelement eingestrahlte Lichtmuster bei vorhandenem Leuchtstoffvolumen jedoch nicht oder nicht merklich auf die nachgeschaltete Auskopplungsoptik fortgeführt. Diese formauflösende Wirkung des Leuchtstoffvolumens mag einerseits daher stammen, dass der Leuchtstoff das Sekundärlicht mit einer großen Streubreite abstrahlt, insbesondere ungerichtet oder lambertsch abstrahlt. Für nicht umgewandeltes Primärlicht wirkt das Leuchtstoffvolumen wie ein Streuelement.

Die der Wellenlängenkonversionseinrichtung nachgeschaltete Optik (ohne Beschränkung der Allgemeinheit auch als "Auskopplungsoptik" bezeichnet) mag insbesondere zum Auskoppeln eines von der Wellenlängenkonversionseinrichtung abgestrahlten Lichts (dem "Nutzlicht") aus der Beleuchtungsvorrichtung heraus dienen. So mag die Auskopplungsoptik dazu dienen, ein bestimmtes Lichtabstrahlmuster außerhalb der Beleuchtungsvorrichtung zu erzeugen, z.B. ein Fahrzeug-Lichtmuster wie ein Abblendlicht, Fernlicht usw. oder ein Lichtabstrahlmuster zur Außenbeleuchtung oder zur Gebäudebeleuchtung. Die Auskopplungsoptik mag ein oder mehrere optische Elemente aufweisen.

Unter einem "nicht-abbildenden" Bereich mag insbesondere ein lokal begrenzter Bereich der Auskopplungsoptik verstanden werden, welcher auf ihn auftreffendes Licht nicht zur Bildung eines Lichtabstrahlmusters der Beleuchtungsvorrichtung nutzt. So mag auf den Sicherheitsbereich treffendes Licht entweder daran gehindert werden, aus der Beleuchtungsvorrichtung auszutreten, oder so breit gestreut werden, dass seine maximale Intensität stark sinkt. Der nicht-abbildenden Sicherheitsbereich mag also auch als ein lokal begrenzter Bereich auf der Auskopplungsoptik verstanden werden, der selbst keinen Abbildungsbereich erzeugt.

Der Bereich hoher Intensität des Primärlichts bei entferntem bzw. nicht vorhandenem Leuchtstoffvolumen mag insbesondere einem umlaufend geschlossenen, insbesondere ringförmigen, Bereich oder mindestens einem Sektor oder Teilbereich davon entsprechen.

Es ist eine Ausgestaltung, dass der Träger ein reflektierender Träger ist. Bei dieser "reflektierenden Anordnung" wird das von dem Leuchtstoffvolumen abgestrahlte Sekundär- oder Mischlicht von der gleichen Seite abgestrahlt, auf die auch das Primärlicht einfällt. In Richtung des Trägers abgestrahltes Licht wird in das Leuchtstoffvolumen zurückreflektiert. Im Schadensfall bei nicht mehr vorhandenem Leuchtstoffvolumen wird das von dem Lichtmischelement abgestrahlte Primärlicht mit seinem im Querschnitt insbesondere ringartigen Lichtmuster auf den reflektierenden Träger gestrahlt, ggf. unter Zwischenschaltung weiterer optischer Elemente wie mindestens einer Linse, mindestens eines Umlenkspiegels usw. Das Primärlicht wird auf dem als Umlenkspiegel dienenden (ebenen oder gekrümmten) Träger verzerrt, z.B. gestreckt, abgebildet und dann auf die Auskopplungsoptik, z.B. umfassend mindestens einen Reflektor, umgelenkt. Auf der Auskopplungsoptik ist der nicht-mittige Bereich hoher Intensität des Primärlichts nochmals durch die Abbildung auf die Auskopplungsoptik verzerrt. Weist die Auskopplungsoptik beispielsweise eine paraboloide Grundform auf, so mag die Form des intensivsten Primärlichtbereichs einer paraboloiden Abbildung des durch den Träger bereits verzerrt ringförmigen Primärlichtmusters entsprechen. Jedoch ist diese Form nicht-mittig in dem Sinne, dass es nicht nur ein in Bezug zur Mittenachse des Primärlichts punktartiges Intensitätsmaximum gibt, das von einem Bereich mit immer weiter abfallender Intensität umgeben ist. An der Position oder Stelle an der Auskopplungsoptik, an welcher die Intensität des Primärlichtstrahls am höchsten ist, befindet sich der Sicherheitsbereich.

Der Sicherheitsbereich mag ein zusammenhängender Sicherheitsbereich sein oder mag mehrere voneinander getrennte Teilbereiche aufweisen. Es ist weiterhin eine Ausgestaltung, dass der Sicherheitsbereich ein zumindest abschnittsweise ringförmig abgebildeter Bereich ist.

Es ist noch eine Ausgestaltung, dass der Träger ein lichtdurchlässiger Träger ist. Diese Ausgestaltung dient zur Umsetzung einer "transmittierenden Anordnung", bei der das von dem Leuchtstoffvolumen abgestrahlte Nutzlicht (Sekundär- oder Mischlicht) von einer Seite aus abgestrahlt wird, die der Seite abgewandt ist, auf welcher der Primärlichtstrahl auftrifft. Der lichtdurchlässige Träger mag z.B. ein Saphir-Träger sein. Im Schadensfall strahlt der Primärlichtstrahl insbesondere praktisch ungehindert durch den Träger und wird dann auf die Auskopplungsoptik abgebildet. Die Auskopplungsoptik mag wie im Fall des reflektierenden Trägers ausgebildet sein.

Es ist ferner eine Ausgestaltung, dass der mindestens eine Sicherheitsbereich ein lichtabsorbierender Bereich ist. Im Schadensfall auf ihn auftreffendes Primärlicht wird also absorbiert und kann nicht mehr aus der Beleuchtungsvorrichtung austreten.

Es ist auch eine Ausgestaltung, dass der mindestens eine Sicherheitsbereich ein diffus lichtstreuender Bereich ist. Im Schadensfall auf ihn auftreffendes Primärlicht wird gestreut reflektiert und dadurch die Kohärenz des Primärlichtes minimiert oder sogar vollständig reduziert. Das gestreut reflektierte Licht weist keine hohe Intensität mehr auf und kann gefahrlos aus der Beleuchtungsvorrichtung abgestrahlt werden. Aufgrund seiner diffusen Natur trägt dieses Licht nur zu einer leichten Anhebung eines Helligkeitsniveaus des aus der Beleuchtungsvorrichtung abgestrahlten Lichts bei, jedoch nicht oder nicht wesentlich zu einer Formung des zugehörigen Lichtabstrahlmusters. Erfindungsgemäß ist der mindestens eine Sicherheitsbereich ein spekular reflektierender Bereich, welcher das auf ihn auftreffende Licht in einen zu dem von der Auskoppeloptik als Nutzlicht auskoppelbaren Lichtabstrahlmuster nicht beitragenden Raumwinkel reflektiert. Auch so kann ein Austreten eines intensiven Primärlichtstrahls im Schadensfall verhindert werden.

Es ist zudem eine Ausgestaltung, dass das auf den mindestens einen Sicherheitsbereich einfallende Licht zumindest teilweise auf einen Lichtsensor reflektiert wird. Dadurch kann der Eintritt eines Schadensfalls auf einfache Weise detektiert werden, beispielsweise durch eine Erkennung eines erhöhten Lichtstroms auf den Lichtsensor, durch Erkennen eines erhöhten Primärlichtanteils usw.

Es ist noch eine Ausgestaltung, dass die Beleuchtungsvorrichtung zumindest ein Teil einer Fahrzeug-Beleuchtungsvorrichtung ist, z.B. ein Modul oder eine "Light Engine". Das Fahrzeug mag insbesondere ein Kraftfahrzeug sein, z.B. ein Pkw. Die Fahrzeug-Beleuchtungsvorrichtung mag insbesondere eine Beleuchtungsvorrichtung zur Außenbeleuchtung sein, insbesondere zur Fahrbahnbeleuchtung. Die Beleuchtungsvorrichtung mag insbesondere ein Scheinwerfer sein, z.B. zur Erzeugung eines Abblendlichts, eines Fernlichts, eines Nebellichts, eines Tagfahrlichts und/oder eines Kurvenlichts.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.
- Fig.1: zeigt als Schnittdarstellung in Seitenansicht skizzenhaft durch ein Lichtmischelement hindurchgestrahltes Primärlicht bei divergenter Lichteinstrahlung;
- Fig.2: zeigt in einer Schrägansicht ein hinter dem Lichtmischelement erzeugtes Lichtmuster;
- Fig.3: zeigt als Schnittdarstellung in Seitenansicht eine Beleuchtungsvorrichtung und
- Fig.4: zeigt in Draufsicht einen Ausschnitt einer Innenseite einer Auskopplungsoptik der Beleuchtungsvorrichtung aus Fig.3.

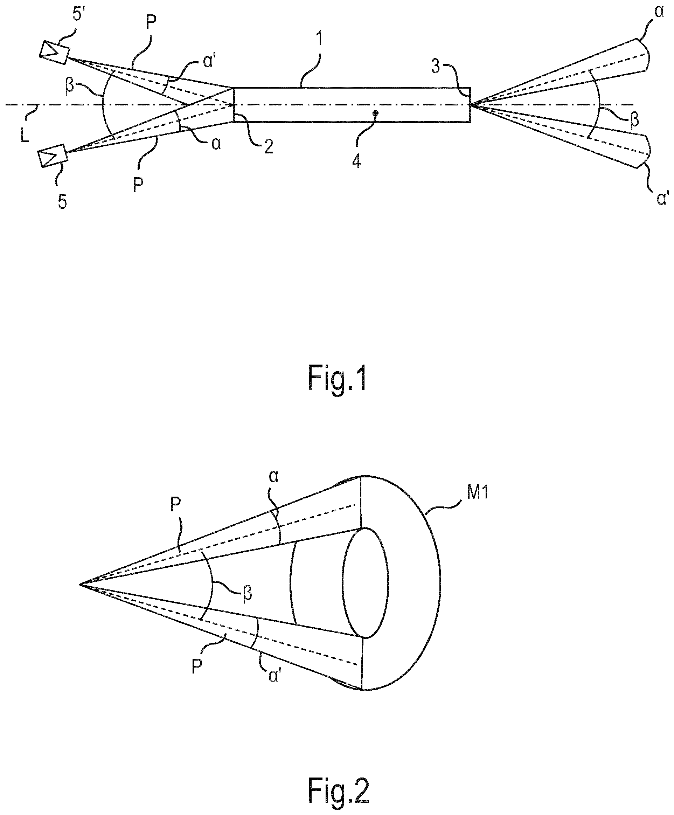

**Fig.1** zeigt als Schnittdarstellung in Seitenansicht skizzenhaft durch ein Lichtmischelement in Form eines Lichtmischstabs 1 hindurchgestrahltes Primärlicht P. Der Lichtmischstab 1 ist geradlinig mit einer Längsachse L ausgebildet. Er weist eine Lichteintrittsfläche 2 und eine Lichtaustrittsfläche 3 auf, welche seinen Stirnseiten entsprechen. Eine Mantelfläche 4 des Lichtmischstabs 1 weist eine im Querschnitt hexagonale oder oktogonale Außenkontur auf.

Das Primärlicht P wird von mehreren Lichtquellen auf die Lichteintrittsfläche 2 gestrahlt, wobei hier rein beispielhaft zwei Laserdioden 5 und 5' blaues Primärlicht P unter einem Winkel β (dem sog. "Divergenzwinkel") zueinander divergent auf die Lichteintrittsfläche 2 einstrahlen. Die von den Laserdioden 5 und 5' emittierten Primärlichtstrahlen weisen Öffnungswinkel α bzw. α' auf. Die vor dem Lichtmischstab 1 bestehenden Werte der Winkel a, α' und β bleiben auch hinter dem Lichtmischstab 1 nach Lichtaustritt aus der Lichtaustrittsfläche 3 erhalten, wie in **Fig.2** gezeigt. Jedoch wird eine Intensitätsverteilung in Umfangsrichtung um die Längsachse herum vergleichmäßigt. Im Fall eines rotationssymmetrischen Lichtmischstabs 1 erhält man ein ringförmiges Lichtmuster M1 hoher Intensität hinter der Lichtaustrittsfläche 3. Bei einer hexagonalen Außenkontur mag sich z.B. eine sechszählige Drehsymmetrie ergeben, z.B. mit sechs lokalen Intensitätsmaxima, die ringförmig verteilt sind.

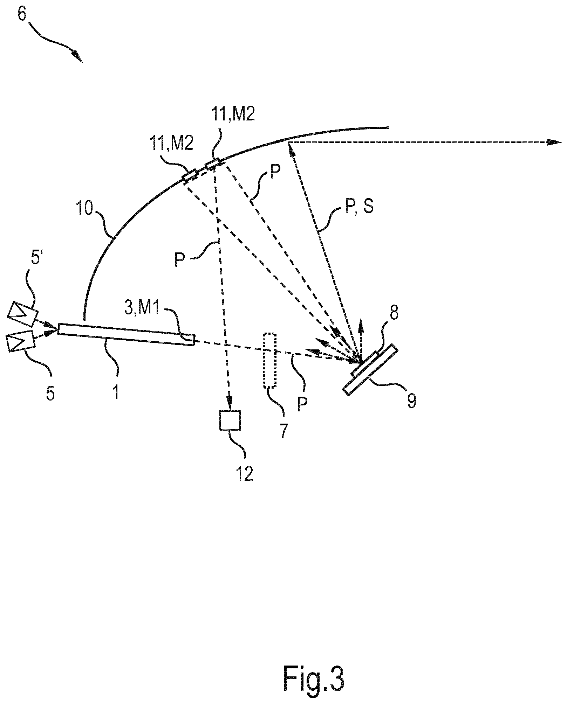

**Fig.3** zeigt eine Beleuchtungsvorrichtung 6 mit dem Lichtmischstab 1 und den Laserdioden 5 und 5' aus Fig.1 und Fig.2. Das aus dem Lichtmischstab 1 austretende Primärlicht P wird, ggf. nach Durchgang durch eine zwischengeschaltete Optik 7 (z.B. einen oder mehrere Spiegel, Linsen usw.), auf ein Leuchtstoffvolumen 8 einer Wellenlängen-Konversionseinrichtung 8, 9 gerichtet. Das Leuchtstoffvolumen 8 liegt in Form eines das blaue Primärlicht P teilweise in gelbes Sekundärlicht S umwandelnden keramischen Leuchtstoffplättchens vor. Das Leuchtstoffvolumen 8 ist auf einem reflektierenden Träger 9 aufgebracht, z.B. aufgeklebt. Von der Wellenlängen-Konversionseinrichtung 8, 9 wird dadurch bei intaktem Leuchtstoffvolumen 8 breitwinklig gelb-blaues bzw. weißes Mischlicht P, S auf einen zumindest als Teil einer Auskoppeloptik dienenden Reflektor 10 gestrahlt. Der Reflektor 10 koppelt das Mischlicht P, S aus der Beleuchtungsvorrichtung 6 aus, ggf. durch weitere optische Elemente (o. Abb.) wie eine Linse usw.

In einem Schadensfall des Leuchtstoffvolumens 8, z.B. wenn ein Loch in dem Leuchtstoffvolumen 8 entstanden ist oder das Leuchtstoffvolumen 8 sich vom Träger 9 gelöst hat, kann der Primärlichtstrahl P zumindest weitgehend ungehindert auf den Träger 9 treffen und von dort auf den Reflektor 10 umgelenkt werden. Dadurch wird das ringförmige Lichtmuster M1 auf den Reflektor 10 abgebildet, wobei es ggf. an der Optik 7 und/oder durch den Träger 9 vorverzerrt und/oder gespiegelt sein mag. Das so abgebildete Lichtmuster M2 des Primärlichts P mit hoher Intensität würde ohne weitere Maßnahmen von dem Reflektor aus der Beleuchtungsvorrichtung 6 ausgekoppelt werden, was ggf. eine Augensicherheitsgefährdung bewirken könnte.

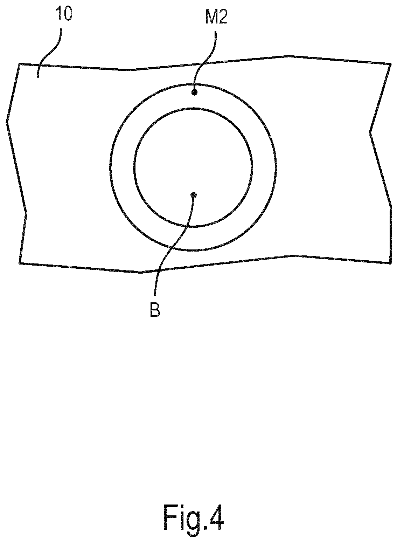

Um dies zu vermeiden, weist der Reflektor 10 an den Positionen (oder Stellen oder Bereichen), an denen sich das Lichtmuster M2 mit hoher Intensität bildet, einen hier ringförmig ausgebildeten Sicherheitsbereich 11 auf, wie auch in **Fig.4** gezeigt. Eine Fläche des Sicherheitsbereiches entspricht der Formgebung der Kontur, den der Sicherheitsbereich 11 auf dem Reflektor 10 einnimmt.

Der Sicherheitsbereich 11 mag z.B. absorbierend oder diffus reflektierend ausgebildet sein, ist hier jedoch beispielhaft spiegelnd ausgebildet. Und zwar wird das Lichtmuster M2 auf einen Lichtsensor 12 reflektiert, mittels dessen bei Bestrahlung durch das Primärlicht P der Schadensfall erkannt werden kann.

Dieses Primärlicht P hoher Intensität tritt also nicht mehr aus der Beleuchtungsvorrichtung 6 aus, so dass eine Augensicherheit gewährleistet ist.

Ein Bereich B innerhalb des Lichtmusters M2, der von dem Lichtmuster M2 umgeben ist, wird hingegen das auf ihn eingestrahlte Licht mittels spekularer Reflexion als Nutzlicht auskoppeln, so wie der restliche Reflektor 10 außer dem Sicherheitsbereich 11. Dabei mag auch die Primärstrahlung P ausgekoppelt werden, allerdings mit unbedenklicher Intensität.

In einem normalen Betrieb bei intaktem und vorhandenem Leuchtstoffvolumen 8 wird auch das auf den Sicherheitsbereich 11 einfallende Mischlicht P, S auf den Lichtsensor 12 abgelenkt, jedoch aufgrund der weitaus homogeneren Intensitätsverteilung des Mischlichts P, S mit einer erheblich geringeren Intensität als bei reinem Primärlicht P. Somit ist der Lichtverlust im normalen Betrieb aufgrund des Sicherheitsbereichs 11 ebenfalls gering. Zudem wird das auf den zentralen Bereich B einfallende Mischlicht P, S im Gegensatz zum Stand der Technik ebenfalls genutzt, was einen Lichtverlust weiter verringert.

Obwohl die Erfindung im Detail durch das gezeigte Ausführungsbeispiel näher illustriert und beschrieben wurde, so ist die Erfindung nicht darauf eingeschränkt und andere Variationen können vom Fachmann hieraus abgeleitet werden, ohne den Schutzumfang der Erfindung zu verlassen.

So braucht der Sicherheitsbereich nicht eine einzige zusammenhängende Fläche oder Bereich einzunehmen, sondern kann z.B. auch mehrere voneinander getrennte Teilflächen oder Teilbereiche einnehmen. Dies mag einen Lichtverlust weiter verringern, beispielsweise dann, wenn die Bereiche hoher Intensität voneinander beabstandete Bereiche sind. So mögen bei sechs voneinander beabstandeten Bereichen hoher Intensität auch sechs entsprechende Sicherheitsbereiche vorhanden sein. Alternativ kann bei einem Vorhandensein mehrerer voneinander beabstandeter Bereiche hoher Intensität mindestens ein Sicherheitsbereich auch für mehrere solcher Bereiche hoher Intensität gemeinsam vorhanden sein, z.B. wenn ein Abstand mindestens zweier Bereiche voneinander gering ist. So mögen bei vier voneinander beabstandeten Bereichen hoher Intensität zwei entsprechende Sicherheitsbereiche vorhanden sein, welche jeweils für zwei eng benachbarte Bereiche hoher Intensität gemeinsam nicht-abbildend wirken.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichen

- 1: Lichtmischstab
- 2: Lichteintrittsfläche des Lichtmischstabs
- 3: Lichtaustrittsfläche des Lichtmischstabs
- 4: Mantelfläche des Lichtmischstabs
- 5: Laserdiode
- 5': Laserdiode
- 6: Beleuchtungsvorrichtung
- 7: Optik
- 8: Leuchtstoffvolumen
- 9: Reflektierender Träger
- 10: Reflektor
- 11: Sicherheitsbereich
- 12: Lichtsensor
- α: Öffnungswinkel
- α': Öffnungswinkel
- B: Bereich
- β: Divergenzwinkel
- L: Längsachse
- M1: Lichtmuster an der Lichtaustrittsfläche
- M2: Lichtmuster auf dem Reflektor
- P: Primärlicht
- S: Sekundärlicht

## Patentansprüche

1. Beleuchtungsvorrichtung (6), aufweisend
- ein Lichtmischelement (1) mit einer Lichteintrittsfläche (2) und einer Lichtaustrittsfläche (3),
- mehrere Lichtquellen (5, 5'), deren Primärlicht (P) auf die Lichteintrittsfläche (2) einstrahlbar ist,
- eine Wellenlängenkonversionseinrichtung (8, 9) mit einem Träger (9), an dem ein Leuchtstoffvolumen (8) angeordnet ist,
- welches Leuchtstoffvolumen (8) mittels von der Lichtaustrittsfläche (3) abgestrahlten Primärlichts (P) beleuchtbar ist und
- mindestens eine Auskopplungsoptik (10) zum Formen eines von der Wellenlängenkonversionseinrichtung (8, 9) abgestrahlten Nutzlichts (P, S), welche mindestens einen nicht-abbildenden Sicherheitsbereich (11) aufweist,
wobei
- die mehreren Lichtquellen (5, 5') ihr Primärlicht (P) unter einem Winkel (β) auf die Lichteintrittsfläche (2) einstrahlen,
- der mindestens eine Sicherheitsbereich (11) eine Position auf der Auskopplungsoptik (10) einnimmt, welche einem Bereich (M2) hoher Intensität des Primärlichts (P) bei entferntem Leuchtstoffvolumen (8) entspricht
**dadurch gekennzeichnet, dass**
- der mindestens eine Sicherheitsbereich (11) ein spekular reflektierender Bereich ist, welcher das auf ihn auftreffende Licht (P; P, S) in einen zu dem von der Auskoppeloptik (10) als Nutzlicht auskoppelbaren Lichtabstrahlmuster nicht beitragenden Raumwinkel reflektiert.

2. Beleuchtungsvorrichtung (6) nach Anspruch 1, wobei der Träger (9) ein reflektierender Träger ist.

3. Beleuchtungsvorrichtung (6) nach Anspruch 1, wobei der Träger (9) ein lichtdurchlässiger Träger ist.

4. Beleuchtungsvorrichtung (6) nach einem der Ansprüche 1 bis 3, wobei das auf den mindestens einen Sicherheitsbereich (11) einfallende Licht (P; P, S) zumindest teilweise auf einen Lichtsensor (12) reflektiert wird.

5. Beleuchtungsvorrichtung (6) nach einem der vorhergehenden Ansprüche, wobei der Sicherheitsbereich (11) ein zumindest abschnittsweise ringförmig abgebildeter Bereich ist.

6. Beleuchtungsvorrichtung (6) nach einem der vorhergehenden Ansprüche, wobei das Lichtmischelement (1) ein stabförmiges Lichtmischelement ist.

7. Beleuchtungsvorrichtung nach Anspruch 6, wobei das Lichtmischelement (1) zumindest abschnittweise einen hexagonalen Querschnitt (4) aufweist.

8. Beleuchtungsvorrichtung (6) nach einem der vorhergehenden Ansprüche, wobei die Lichtquellen (5, 5') Halbleiterlichtquellen sind.

9. Beleuchtungsvorrichtung (6) nach einem der vorhergehenden Ansprüche, wobei die Beleuchtungsvorrichtung (6) zumindest ein Teil einer Fahrzeug-Beleuchtungsvorrichtung ist.

## Claims

1. Lighting device (6), comprising
- a light mixing element (1) having a light entry surface (2) and a light exit surface (3),
- multiple light sources (5, 5'), the primary light (P) of which can be radiated onto the light entry surface (2),
- a wavelength conversion unit (8, 9) having a carrier (9), on which a luminescent volume (8) is arranged,
- which luminescent volume (8) can be illuminated by means of the primary light (P) emitted by the light exit surface (3), and
- at least one decoupling optical unit (10) for forming useful light (P, S) emitted by the wavelength conversion unit (8, 9), which has at least one non-imaging safety region (11),
wherein
- the multiple light sources (5, 5') radiate the primary light (P) thereof at an angle (β) onto the light entry surface (2),
- the at least one safety region (11) occupies a position on the decoupling optical unit (10) which corresponds to a region (M2) of high intensity of the primary light (P) in the case of remote luminescent volume (8)
**characterized in that**
- the at least one safety region (11) is a specularly reflective region, which reflects the light (P; P, S) incident thereon in a spatial angle which does not contribute to the light emission pattern which can be decoupled by the decoupling optical unit (10) as useful light.

2. Lighting device (6) according to Claim 1, wherein the carrier (9) is a reflective carrier.

3. Lighting device (6) according to Claim 1, wherein the carrier (9) is a light-transmissive carrier.

4. Lighting device (6) according to any one of Claims 1 to 3, wherein the light (P; P, S) incident on the at least one safety region (11) is at least partially reflected on a light sensor (12) .

5. Lighting device (6) according to any one of the preceding claims, wherein the safety region (11) is a region imaged in a ring shape at least in sections.

6. Lighting device (6) according to any one of the preceding claims, wherein the light mixing element (1) is a rod-shaped light mixing element.

7. Lighting device according to Claim 6, wherein the light mixing element (1) has a hexagonal cross section (4) at least in sections.

8. Lighting device (6) according to any one of the preceding claims, wherein the light sources (5, 5') are semiconductor light sources.

9. Lighting device (6) according to any one of the preceding claims, wherein the lighting device (6) is at least a part of a vehicle lighting device.

## Revendications

1. Dispositif d'éclairage (6), comprenant
- un élément de mélange de lumière (1) avec une surface d'entrée de lumière (2) et une surface de sortie de lumière (3),
- plusieurs sources de lumière (5, 5'), dont la lumière primaire (P) peut être projetée sur la surface d'entrée de lumière (2),
- un dispositif de conversion de longueurs d'onde (8, 9) avec un support (9) sur lequel est disposé un volume de substance luminophore (8),
- lequel volume de substance luminophore (8) peut être éclairé au moyen de la lumière primaire (P) émise par la surface de sortie de lumière (3) et
- au moins une optique d'extraction (10) pour la formation d'une lumière utile (P, S) émise par le dispositif de conversion de longueurs d'onde (8, 9), laquelle comprend au moins une zone de sécurité sans formation d'images (11),
dans lequel
- les plusieurs sources de lumière (5, 5') projettent leur lumière primaire (P) sous un angle (β) sur la surface d'entrée de lumière (2),
- l'au moins une zone de sécurité (11) adopte une position sur l'optique d'extraction (10) qui correspond à une zone (M2) à lumière primaire (P) d'intensité élevée lorsque le volume de substance luminophore (8) est retiré
**caractérisé en ce que**
- l'au moins une zone de sécurité (11) est une zone à réflexion spéculaire qui réfléchit la lumière (P ; P, S) qui arrive sur elle selon un angle solide ne contribuant pas au modèle d'émission de lumière pouvant être extrait sous forme de lumière utile par l'optique d'extraction (10).

2. Dispositif d'éclairage (6) selon la revendication 1, dans lequel le support (9) est un support réfléchissant.

3. Dispositif d'éclairage (6) selon la revendication 1, dans lequel le support (9) est un support transparent.

4. Dispositif d'éclairage (6) selon l'une des revendications 1 à 3, dans lequel la lumière (P ; P, S) incidente sur l'au moins une zone de sécurité (11) est réfléchie au moins en partie sur un capteur de lumière (12).

5. Dispositif d'éclairage (6) selon l'une des revendications précédentes, dans lequel la zone de sécurité (11) est une zone imagée au moins par endroits sous forme annulaire.

6. Dispositif d'éclairage (6) selon l'une des revendications précédentes, dans lequel l'élément de mélange de lumière (1) est un élément de mélange de lumière en forme de tige.

7. Dispositif d'éclairage selon la revendication 6, dans lequel l'élément de mélange de lumière (1) possède au moins par endroits une section transversale hexagonale (4).

8. Dispositif d'éclairage (6) selon l'une des revendications précédentes, dans lequel les sources de lumière (5, 5') sont des sources de lumière à semi-conducteurs.

9. Dispositif d'éclairage (6) selon l'une des revendications précédentes, le dispositif d'éclairage (6) étant au moins une partie d'un dispositif d'éclairage pour véhicule.
